# EUROPÄISCHE PATENTSCHRIFT

(11) **EP 3 114 371 B1**
(45) Veröffentlichungstag und Bekanntmachung des Hinweises auf die Patenterteilung: **20.12.2017**
(21) Anmeldenummer: 15702796.2
(22) Anmeldetag: 06.02.2015
(51) Int. Cl.: F16H 57/04

(54) **VERFAHREN ZUM ANSTEUERN EINES HYDRAULIKMITTELVERSORGUNGSSYSTEMS EINES AUTOMATIKGETRIEBES**
METHOD FOR CONTROLLING A HYDRAULIC-MEDIUM SUPPLY SYSTEM OF AN AUTOMATIC TRANSMISSION
PROCÉDÉ DE COMMANDE D'UN SYSTÈME D'ALIMENTATION EN FLUIDE HYDRAULIQUE D'UNE TRANSMISSION AUTOMATIQUE

(30) Priorität: 06.03.2014 DE 102014204072
(43) Veröffentlichungstag der Anmeldung: 11.01.2017
(73) Patentinhaber: ZF Friedrichshafen AG, 88046 Friedrichshafen (DE)
(72) Erfinder: LOCHER, Karl, 72539 Pfronstetten-Tigerfeld (DE); HOFFMANN, Alexander, 66822 Lebach (DE); NOVAK, Rainer, A-6900 Bregenz (AT); BADER, Martin-Joachim, 88284 Mochenwangen (DE); TERWART, Markus, 97711 Thundorf (DE)
(86) Internationale Anmeldenummer: PCT/EP2015/052478
(87) Internationale Veröffentlichungsnummer: WO 2015/132035

(56) Entgegenhaltungen:
- DE-A1-102009 019 959
- DE-A1-102011 075 411
- DE-B3-102012 214 495

## Beschreibung

Die vorliegende Erfindung betrifft ein Verfahren zum Ansteuern eines Hydraulikmittelversorgungssystems eines Automatikgetriebes eines Fahrzeuges gemäß der im Oberbegriff des Patentanspruches 1 näher definierten Art.

Automatikgetriebe benötigen zumindest ein Hydraulikmittelversorgungssystem zur Hydraulikmittelversorgung von Getriebeelementen, wie zum Beispiel Schaltelemente oder dergleichen. Zur Hydraulikmittelversorgung des Systems sind üblicherweise eine motorseitig angetriebene Hydraulikpumpe und eine getriebeabtriebsseitige bzw. radsatzseitig angetriebene Hydraulikpumpe vorgesehen. Die vorgesehenen Hydraulikpumpen können getrennten Hydraulikmittelhaushalten bzw. Systemen zugeordnet sein, so dass die motorseitig angetriebene Hydraulikpumpe zur Systemdruckerzeugung und die radsatzseitig angetriebene Hydraulikpumpe zur Radsatzkühlung verwendet werden. Somit bedienen die Hydraulikpumpen baulich getrennte Ölhaushalte bzw. Hydraulikmittelversorgungskreise und können somit sich nicht gegenseitig unterstützen. Es ist auch bekannt, dass die Hydraulikpumpen einem gemeinsamen Hydraulikmittelversorgungskreis zugeordnet sind.

Es hat sich in nachteiliger Weise gezeigt, dass eine derartige Hydraulikmittelversorgung bei bestimmten Betriebsmodi des Fahrzeuges zum Beispiel keinen Systemdruck zum Betätigen von Schaltelementen zur Verfügung stellt, so dass z. B. eine Gangnachführung oder eine Kupplungsbefüllung aufgrund fehlendem Systemdruck während vorbestimmter Betriebsmodi nicht möglich ist.

Das Dokument DE 10 2009 017 959 A1 offenbart eine Antriebsstrangvorrichtung mit einem Hydrauliksystem, welches zwei Pumpen aufweist, von denen eine Pumpe von einer Verbrennungskraftmaschine oder einer Hybrideinheit angetrieben wird und die andere Pumpe von einem separaten elektrischen Motor antreibbar ist.

Der vorliegenden Erfindung liegt die Aufgabe zu Grunde, ein Verfahren zum Ansteuern eines Hydraulikmittelversorgungssystems der eingangs beschriebenen Gattung vorzuschlagen, welches eine verbrauchsoptimierte Ansteuerung des Hydraulikmittelversorgungssystems des Automatikgetriebes gewährleistet.

Diese Aufgabe wird erfindungsgemäß durch die Merkmale des Patentanspruches 1 gelöst, wobei sich vorteilhafte Weiterbildungen aus den Unteransprüchen, der Beschreibung und den Zeichnungen ergeben.

Es wird ein Verfahren zum Ansteuern eines oder mehrerer Hydraulikmittelversorgungssysteme eines Automatikgetriebes, insbesondere eines Doppelkupplungsgetriebes, eines Fahrzeuges vorgeschlagen, wobei das Hydraulikmittelversorgungssystem zumindest von einer motorseitig angetriebenen Hydraulikpumpe und von einer radsatzseitig angetriebenen Hydraulikpumpe mit Hydraulikmittel versorgt wird. Ein Kühlventil des Hydraulikmittelversorgungssystems zur Öl- bzw. Hydraulikmittelversorgung wird in Abhängigkeit von erfassten Fahrzeugparametern oder dergleichen zum Einstellen einer angepassten verbrauchsoptimierten Leistungsverteilung bei den Hydraulikpumpen angesteuert.

Demzufolge wird zunächst der jeweilige Betriebsmodus des Fahrzeuges ermittelt und in Abhängigkeit des erfassten Betriebsmodus wird eine geeignete Ansteuerung der Hydraulikpumpen über das Kühlventil realisiert, um dadurch eine verbrauchsoptimierte Leistungsverteilung bei den Hydraulikpumpen für die Hydraulikmittelversorgung vorzunehmen. Beispielsweise können die Fahrzeugparameter von der elektronischen Getriebesteuerung erfasst und entsprechend ausgewertet werden, um die als Modelle hinterlegten Betriebsmodi zu erkennen. Das Kühlventil wird entsprechend der vorgegebenen Betriebsmodi angesteuert und nimmt somit unterschiedliche Schaltpositionen ein.

Beispielsweise können bei dem vorgeschlagenen Verfahren verschiedene Betriebsmodi erfasst werden. Beim ersten Betriebsmodus befindet sich das Fahrzeug zum Beispiel im nicht segelnden Fahrzustand, d.h. die Segelfunktion ist deaktiviert. Im Rahmen des ersten Betriebsmodus kann sich das Fahrzeug auch bei langsamer Fahrt mit zusätzlicher Motorstartanforderung im segelnden Fahrzustand befinden.

Ein zweiter Betriebsmodus ist z. B. die aktivierte Segelfunktion mit Motorlauf bei langsamer Fahrt. Im Rahmen eines dritten Betriebsmodus befindet sich das Fahrzeug ohne Motorlauf im segelnden Fahrzustand. Es ist auch möglich, dass sich das Fahrzeug im dritten Betriebsmodus mit Motorlauf im segelnden Fahrzustand befindet. Schließlich befindet sich das Fahrzeug im vierten Betriebsmodus z. B. bei Hochgeschwindigkeitsfahrt im nicht segelnden Fahrzustand. Es sind auch weitere Betriebsmodi von dem erfindungsgemäßen Verfahren erfassbar.

Nachfolgend wird die vorliegende Erfindung anhand der Zeichnungen weiter erläutert. Es zeigen:
- Figur 1: eine schematische Ansicht eines Hydraulikmittelversorgungssystems eines Automatikgetriebes eines Fahrzeuges; und
- Figur 2: eine schematische Ansicht eines möglichen Ablaufschemas des erfindungsgemäßen Verfahrens zum Ansteuern des Hydraulikmittelversorgungssystems.

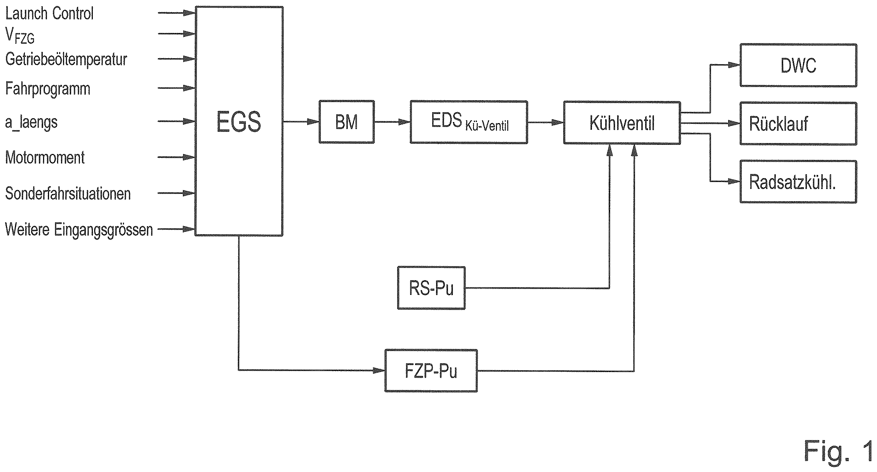

In Figur 1 ist schematisch ein Hydraulikmittelversorgungssystem für ein Automatikgetriebe, insbesondere ein Doppelkupplungsgetriebe, eines Fahrzeuges beispielhaft dargestellt. Das Hydraulikmittelversorgungssystem umfasst einen Hydraulikmittelkreislauf, der zum Kühlen und Betätigen sowie Schmieren von Getriebeelementen des Automatikgetriebes vorgesehen ist. Der Hydraulikmittelkreislauf wird über eine antriebsseitig angetriebene Hydraulikpumpe FZP-Pu und eine radsatzseitige angetriebene Hydraulikpumpe RS-Pu mit Hydraulikmittel bzw. Öl versorgt. Der Hydraulikmittelkreislauf ist mit einem Rücklauf zum Ölkühler und zum Hydraulikmittelsumpf verbunden. In dem Hydraulikmittelversorgungssystem ist zudem ein Kühlventil angeordnet, mit dem die Volumenströme regelbar sind. Das Kühlventil wird über einen elektrischen Drucksteller EDS angesteuert. Dies hat den Vorteil, dass der Hydraulikmittel- bzw. Kühlölvolumenstrom bedarfs- und wirkungsgradoptimiert erzeugt und verteilt werden kann. In der Ansteuerung kann auch ein Kennfeld mit entsprechenden Modellen bzw. eine Matrix mit verschiedenen Betriebsmodi hinterlegt werden. Es werden ständig der zufließende bzw. notwendige und abfließende Volumenstrom ermittelt und daraus kann die Volumenstromerzeugung bzw. Volumenstromverteilung durch die vorgegebenen Betriebsmodi variiert werden. Zusätzlich sind die Betriebsmodi aufgrund der eingehenden Parameter in Bezug auf die Volumenstromerzeugung und -verteilung variabel. Dies bedeutet, dass zum Beispiel bei einem starken Getriebeöltemperaturanstieg der Volumenstrom in dem momentan vorgegebenen Betriebsmodus temperaturabhängig verändert werden kann und somit der Gesamtvolumenstrom zur Reduzierung der Getriebeöltemperatur erhöht wird.

Über die elektronische Getriebesteuerung EGS werden verschiedene Fahrzeugparameter erfasst und ausgewertet. Aufgrund der ausgewerteten Fahrzeugparameter wird ein entsprechender Betriebsmodus BM1, BM2, BM3, BM4, BM5, ... ermittelt. Im Rahmen des beispielhaft dargestellten Ablaufdiagrammes wird als erster Betriebsmodus BM1 der Fahrzustand im nicht segelnden Zustand erkannt, wobei alternativ auch als erster Betriebsmodus BM1 der Zustand erfasst wird, bei dem sich das Fahrzeug bei langsamer Fahrt mit zusätzlicher Motorstartanforderung im segelnden Fahrzustand befindet. Als möglicher zweiter Betriebsmodus BM2 kann der Fahrzustand erfasst werden, bei dem sich das Fahrzeug unter Motorlauf bei langsamer Fahrt im segelnden Fahrzustand befindet. Als dritter Betriebsmodus BM3 kann der Fahrzustand erfasst werden, bei dem sich das Fahrzeug ohne Motorlauf im segelnden Fahrzustand befindet. Alternativ kann bei dem dritten Betriebsmodus BM3 auch der Zustand erfasst werden, bei dem sich das Fahrzeug mit Motorlauf im segelnden Fahrzustand befindet. Im Rahmen des vierten Betriebsmodus BM4 kann der Zustand erfasst werden, bei dem sich das Fahrzeug mit Hochgeschwindigkeitsfahrt im nicht segelnden Zustand befindet. Schließlich sind weitere Betriebsmodi BM5 usw. ebenfalls von dem Verfahren erfassbar.

Dem jeweiligen Betriebsmodus BM1, BM2, BM3, BM4 sind entsprechende Ansteuerungsmodelle für das Kühlventil zugeordnet, wobei die entsprechende Ansteuerung über den elektrischen Drucksteller EDS erfolgt. Auf diese Weise werden entsprechende Schaltpositionen bei dem Kühlventil eingestellt, so dass die Hydraulikmittelversorgung zum Beispiel für die Versorgung der Doppelkupplung DWC, für die Radsatzkühlung und -schmierung oder dergleichen gewährleistet ist, wobei überschüssiges Hydraulikmittel dem Rücklauf, also dem Kühler bzw. dem Sumpf zugeordnet wird.

Zur Hydraulikmittelversorgung des Hydraulikmittelversorgungssystems sind sowohl eine motorseitig angetriebene Hydraulikpumpe bzw. Flügelzellenpumpe FZP-Pu und eine radsatzseitig angetriebene Hydraulikpumpe RS-Pu zugeordnet.

Als mögliche Fahrzeugparameter kann die elektronische Getriebesteuerung EGS zum Beispiel die Launch-Control, die Fahrzeuggeschwindigkeit V_{FZG}, die Getriebeöltemperatur, das jeweilige Fahrprogramm, die Fahrzeug-Längsbeschleunigung a_laengs, das Motormoment, Sonderfahrsituationen, wie z. B. Start-Stopp-Betrieb und erhöhter Schlupfbetrieb, oder dergleichen erfassen.

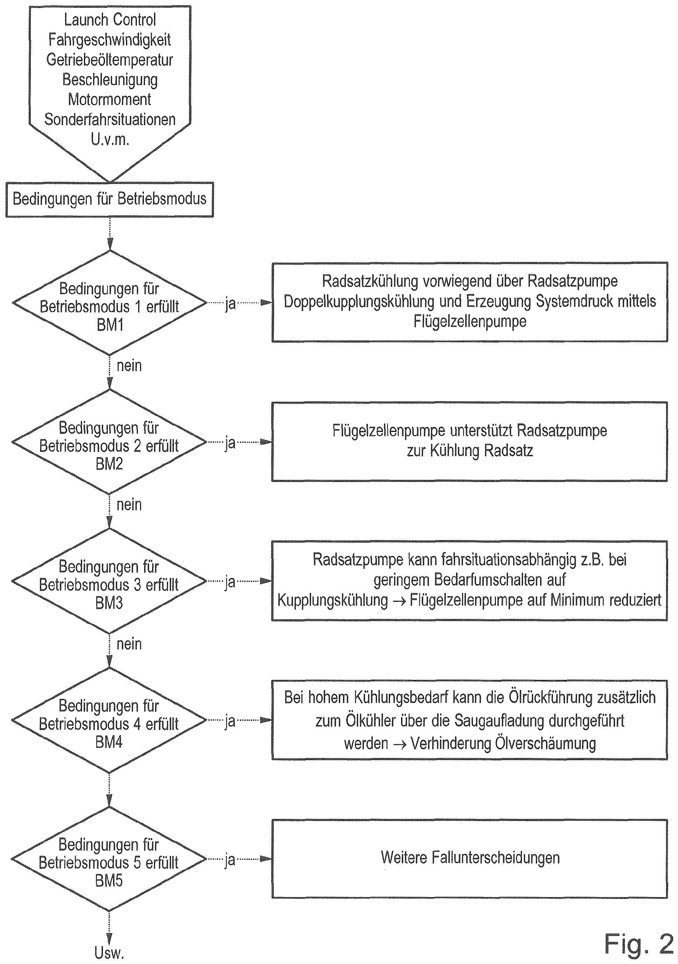

In Figur 2 ist ein entsprechendes Ablaufdiagramm des vorgeschlagenen Verfahrens bzw. der vorgeschlagenen Verfahrensweise beispielhaft dargestellt. Zunächst werden aus den erfassten Fahrzeugparametern die Bedingungen für das Vorliegen eines entsprechenden Betriebsmodus BM1, BM2, BM3, BM4 ermittelt.

Wenn die Bedingungen für den ersten Betriebsmodus BM1 erfüllt sind, wird die Radsatzkühlung überwiegend über die radsatzseitig angetriebene Hydraulikpumpe RS-Pu durchgeführt. Die Kupplungs- bzw. Doppelkupplungskühlung und die Erzeugung des Systemdruckes zum Betätigen der Schaltelemente werden mittels der motorseitig angetriebenen Hydraulikpumpe FZP-Pu durchgeführt.

Wenn die Bedingungen für den zweiten Betriebsmodus BM2 erfüllt sind, wird die radsatzseitig angetriebene Hydraulikpumpe RS-Pu zur Kühlung des Radsatzes in entsprechenden Fahrsituationen, wie zum Beispiel beim so genannten Rennstart oder bei langsamer Fahrt des Fahrzeuges durch die motorseitig angetriebene Hydraulikpumpe FZP-Pu unterstützt.

Wenn die Bedingungen für den dritten Betriebsmodus BM3 erfüllt sind, kann die Radsatzpumpe bzw. die radsatzseitig angetriebene Hydraulikpumpe RS-Pu fahrsituationsabhängig, zum Beispiel bei geringerem Bedarf, zur Kupplungskühlung umgeschaltet werden. Dadurch kann die Förderleistung der Flügelzellenpumpe bzw. der motorseitig angetriebenen Hydraulikpumpe FZP-Pu auf ein Minimum reduziert werden.

Wenn die Bedingungen für den vierten Betriebsmodus BM4 erfüllt sind, wird bei einem hohen Kühlbedarf die Ölrückführung zusätzlich zum Ölkühler über die Saugaufladung durchgeführt, welches eine Verhinderung bzw. Reduzierung der Ölverschäumung in vorteilhafter Weise zur Folge hat.

### Bezugszeichen

- EGS: elektronische Getriebesteuerung
- V_{FZG}: Fahrzeuggeschwindigkeit
- a_laengs: Längsbeschleunigung
- BM1: erster Betriebsmodus
- BM2: zweiter Betriebsmodus
- BM3: dritter Betriebsmodus
- BM4: vierter Betriebsmodus
- BM5: weiterer Betriebsmodus
- EDS: elektromagnetischer Drucksteller
- DWC: Doppelkupplung
- FZP-Pu: motorseitig angetriebene Hydraulikpumpe bzw. Flügelzellenpumpe
- RS-Pu: Radsatzpumpe

## Patentansprüche

1. Verfahren zum Ansteuern eines Hydraulikmittelversorgungssystems eines Automatikgetriebes eines Fahrzeuges, wobei das Hydraulikmittelversorgungssystem zumindest von einer motorseitig angetriebenen Hydraulikpumpe (FZP-Pu) und von einer radsatzseitig angetriebenen Hydraulikpumpe (RS-Pu) mit Hydraulikmittel versorgt wird, wobei ein Kühlventil des Hydraulikmittelversorgungssystems zur Hydraulikmittelversorgung in Abhängigkeit von erfassten Fahrzeugparametern zum Einstellen einer angepassten Leistungsverteilung bei den Hydraulikpumpen (FZP-Pu, RS-Pu) angesteuert wird, wobei in Abhängigkeit von erfassten Fahrzeugparametern ein jeweils vorliegender Betriebsmodus (BM1, BM2, BM3, BM4, BM5) des Fahrzeuges zur Ansteuerung des Kühlventils ermittelt wird, **dadurch gekennzeichnet, dass** bei erfasstem ersten Betriebsmodus (BM1), bei dem sich das Fahrzeug bei langsamer Fahrt mit zusätzlicher Motorstartanforderung im segelnden Fahrzustand befindet, das Kühlventil derart angesteuert wird, dass die Radsatzkühlung überwiegend von der radsatzseitigen Hydraulikpumpe (RS-Pu) durchgeführt wird und dass die Kühlung der Kupplungen und die Erzeugung eines Systemdruckes durch die motorseitig angetriebene Hydraulikpumpe (FZP-Pu) durchgeführt wird.

2. Verfahren nach dem Oberbegriff von Anspruch 1, oder nach Anspruch 1, **dadurch gekennzeichnet, dass** bei erfasstem zweiten Betriebsmodus (BM2), bei dem sich das Fahrzeug unter Motorlauf bei langsamer Fahrt im segelnden Fahrzustand befindet, das Kühlventil derart angesteuert wird, dass die radsatzseitig angetriebene Hydraulikpumpe (RS-Pu) durch die motorseitig angetriebene Hydraulikpumpe (FZP-Pu) zur Radsatzkühlung unterstützt wird.

3. Verfahren nach dem Oberbegriff von Anspruch 1 oder nach Anspruch 1 oder 2, **dadurch gekennzeichnet, dass** bei erfasstem dritten Betriebsmodus (BM3), bei dem sich das Fahrzeug ohne Motorlauf im segelnden Fahrzustand befindet, das Kühlventil derart angesteuert wird, dass die Radsatzkühlung durch die radsatzseitig angetriebene Hydraulikpumpe (RS-Pu) durchgeführt wird, wobei die radsatzseitig angetriebene Hydraulikpumpe (RS-Pu) fahrsituationsabhängig bei geringem Radsatzkühlbedarf zusätzlich auf Kupplungskühlung umgeschaltet wird und wobei das Fördervolumen der motorseitig angetriebenen Hydraulikpumpe (FZP-Pu) auf ein Minimum reduziert wird.

4. Verfahren nach dem Oberbegriff von Anspruch 1 oder nach Anspruch 1 oder 2, **dadurch gekennzeichnet, dass** bei erfasstem dritten Betriebsmodus (BM3), bei dem sich das Fahrzeug mit Motorlauf im segelnden Fahrzustand befindet, das Kühlventil derart angesteuert wird, dass die Radsatzkühlung durch die radsatzseitig angetriebene Hydraulikpumpe (RS-Pu) durchgeführt wird, wobei die radsatzseitig angetriebene Hydraulikpumpe (RS-Pu) fahrsituationsabhängig bei geringem Radsatzkühlbedarf zusätzlich auf Kupplungskühlung umgeschaltet wird und wobei das Fördervolumen der motorseitig angetriebenen Hydraulikpumpe (FZP-Pu) auf ein Minimum reduziert wird.

5. Verfahren nach dem Oberbegriff von Anspruch 1 oder nach einem der Ansprüche 1 bis 4, **dadurch gekennzeichnet, dass** bei erfasstem viertem Betriebsmodus (BM4), bei dem sich das Fahrzeug mit Hochgeschwindigkeitsfahrt im nicht segelnden Fahrzustand befindet, das Kühlventil derart angesteuert wird, dass bei hohem Hydraulikmittelbedarf die Hydraulikmittelführung zum Ölkühler über die Saugaufladung geführt wird.

## Claims

1. Method for actuating a hydraulic medium supply system of an automatic transmission of a vehicle, wherein the hydraulic medium supply system is supplied with hydraulic medium at least by a hydraulic pump (FZP-Pu) which is driven on the motor side and by a hydraulic pump (RS-Pu) which is driven on the wheel set side, wherein a cooling valve of the hydraulic medium supply system for supplying hydraulic medium is actuated as a function of sensed vehicle parameters for setting an adapted power distribution at the hydraulic pumps (FZP-Pu, RS-Pu), wherein a respectively present operating mode (BM1, BM2, BM3, BM4, BM5) of the vehicle for the actuation of the cooling valve is determined as a function of sensed vehicle parameters, **characterized in that** when a first operating mode (BM1), in which the vehicle is in the coasting driving state during slow travel with an additional engine start request, is sensed, the cooling valve is actuated in such a way that the cooling of the wheel set is carried out predominantly by the wheel set-side hydraulic pump (RS-Pu), and **in that** the cooling of the clutches and the generation of a system pressure are carried out by the hydraulic pump (FZP-Pu) which is driven on the motor side.

2. Method according to the preamble of Claim 1 or according to Claim 1, **characterized in that** when a second operating mode (BM2), in which the vehicle is in the sailing driving state with the engine running during slow travel, is sensed, the cooling valve is actuated in such a way that the hydraulic pump (RS-Pu) which is driven on the wheel set side is assisted by the hydraulic pump (FZP-Pu) which is driven on the motor side for cooling the wheel set.

3. Method according to the preamble of Claim 1 or according to Claim 1 or 2, **characterized in that** when a third operating mode (BM3), in which the vehicle is in the coasting driving state without the engine running, is sensed, the cooling valve is actuated in such a way that the cooling of the wheel set is carried out by the hydraulic pump (RS-Pu) which is driven on the wheel set side, wherein the hydraulic pump (RS-Pu) which is driven on the wheel set side is additionally switched over to cooling of the clutch as a function of the driving situation when the demand for cooling of the wheel set is low, and wherein the delivery volume of the hydraulic pump (FZP-Pu) which is driven on the motor side is reduced to a minimum.

4. Method according to the preamble of Claim 1 or according to Claim 1 or 2, **characterized in that** when a third operating mode (BM3), in which the vehicle is in the coasting driving state with the engine running, is sensed, the cooling valve is actuated in such a way that the cooling of the wheel set is carried out by the hydraulic pump (RS-Pu) which is driven on the wheel set side, wherein the hydraulic pump (RS-Pu) which is driven on the wheel set side is additionally switched over to cooling of the clutch as a function of the driving situation when the demand for cooling of the wheel set is low, and wherein the delivery volume of the hydraulic pump (FZP-Pu) which is driven on the motor side is reduced to a minimum.

5. Method according to the preamble of Claim 1 or according to one of Claims 1 to 4, **characterized in that** when the fourth operating mode (BM4), in which the vehicle is in the non-coasting driving state and traveling at high speed, is sensed, the cooling valve is actuated in such a way that when there is a high demand for hydraulic medium the supply of hydraulic medium to the oil cooler is directed via the suction charging system.

## Revendications

1. Procédé de commande d'un système d'alimentation en fluide hydraulique d'une transmission automatique d'un véhicule, dans lequel on alimente en fluide hydraulique le système d'alimentation en fluide hydraulique au moins par une pompe hydraulique entraînée côté moteur (FZP-Pu) et par une pompe hydraulique entraînée côté roues (RS-Pu), dans lequel on commande une soupape de refroidissement du système d'alimentation en fluide hydraulique pour l'alimentation en fluide hydraulique en fonction de paramètres détectés du véhicule pour le réglage d'une répartition de charge adaptée dans les pompes hydrauliques (FZP-Pu, RS-Pu), dans lequel on détermine en fonction de paramètres détectés du véhicule un mode de fonctionnement respectivement présent (BM1, BM2, BM3, BM4, BM5) du véhicule pour la commande de la soupape de refroidissement, **caractérisé en ce que**, lorsque l'on détecte le premier mode de fonctionnement (BM1), dans lequel le véhicule se trouve en état de roulage autonome à faible vitesse avec demande supplémentaire de démarrage du moteur, on commande la soupape de refroidissement de telle manière que le refroidissement des roues soit effectué principalement par la pompe hydraulique côté roues (RS-Pu) et que le refroidissement de l'embrayage et la production d'une pression de système soient assurés par la pompe hydraulique entraînée côté moteur (FZP-Pu).

2. Procédé selon le préambule de la revendication 1, ou selon la revendication 1, **caractérisé en ce que**, lorsque l'on détecte le deuxième mode de fonctionnement (BM2), dans lequel le véhicule se trouve en état de roulage autonome à faible vitesse avec moteur, on commande la soupape de refroidissement de telle manière que la pompe hydraulique entraînée côté roues (RS-Pu) soit assistée par la pompe hydraulique entraînée côté moteur (FZP-Pu) pour le refroidissement des roues.

3. Procédé selon le préambule de la revendication 1 ou selon la revendication 1 ou 2, **caractérisé en ce que**, lorsque l'on détecte le troisième mode de fonctionnement (BM3), dans lequel le véhicule se trouve en état de roulage autonome sans moteur, on commande la soupape de refroidissement de telle manière que le refroidissement des roues soit effectué par la pompe hydraulique entraînée côté roues (RS-Pu), dans lequel on commute la pompe hydraulique entraînée côté roues (RS-Pu) en plus sur le refroidissement de l'embrayage en fonction de la situation de roulage si la demande de refroidissement des roues est faible, et dans lequel on réduit à un minimum le volume refoulé de la pompe hydraulique entraînée côté moteur (FZP-Pu).

4. Procédé selon le préambule de la revendication 1 ou selon la revendication 1 ou 2, **caractérisé en ce que**, lorsque l'on détecte le troisième mode de fonctionnement (BM3), dans lequel le véhicule se trouve en état de roulage autonome avec moteur, on commande la soupape de refroidissement de telle manière que le refroidissement des roues soit effectué par la pompe hydraulique entraînée côté roues (RS-Pu), dans lequel on commute la pompe hydraulique entraînée côté roues (RS-Pu) en plus sur le refroidissement de l'embrayage en fonction de la situation de roulage si la demande de refroidissement des roues est faible et dans lequel on réduit à un minimum le volume refoulé de la pompe hydraulique entraînée côté moteur (FZP-Pu).

5. Procédé selon le préambule de la revendication 1 ou selon l'une quelconque des revendications 1 à 4, **caractérisé en ce que**, lorsque l'on détecte le quatrième mode de fonctionnement (BM4), dans lequel le véhicule se trouve en état de roulage entraîné en marche à grande vitesse, on commande la soupape de refroidissement de telle manière que, avec une demande élevée de fluide hydraulique, on guide le guidage de fluide hydraulique vers le refroidisseur d'huile par suralimentation de l'aspiration.
